# EUROPÄISCHE PATENTSCHRIFT

(11) **EP 1 807 994 B1**
(45) Veröffentlichungstag und Bekanntmachung des Hinweises auf die Patenterteilung: **18.05.2016**
(21) Anmeldenummer: 05803715.1
(22) Anmeldetag: 19.10.2005
(51) Int. Cl.: H04L 29/06, G06F 21/10, G06F 21/62, H04N 21/418

(54) **VERFAHREN UND VORRICHTUNG ZUR ENTSCHLÜSSELUNG BREITBANDIGER DATEN**
METHOD AND DEVICE FOR DECRYPTING BROADBAND DATA
PROCEDE ET DISPOSITIF POUR DECRYPTER DES DONNEES A LARGE BANDE

(30) Priorität: 26.10.2004 DE 102004052101
(43) Veröffentlichungstag der Anmeldung: 18.07.2007
(73) Patentinhaber: Comvenient GmbH & Co. KG, 80807 München (DE)
(72) Erfinder: KUKLA, Hubert, E., 85445 Oberding (DE); BARTH, Ingo, 85774 Unterföhring (DE)
(74) Vertreter: Heselberger, Johannes
(86) Internationale Anmeldenummer: PCT/EP2005/011235
(87) Internationale Veröffentlichungsnummer: WO 2006/045507

(56) Entgegenhaltungen:
- WO-A-2004/027622
- US-B1- 6 728 379

## Beschreibung

### 1. Technisches Gebiet

Die vorliegende Erfindung betrifft ein Verfahren und eine Vorrichtung zur Entschlüsselung von verschlüsselten breitbandigen Daten durch einen oder mehrere autorisierte Anwender.

### 2. Der Stand der Technik

Bei sogenannten "on demand"-Systemen stehen große Nutzdatenmengen, beispielsweise ein Videofilm, mehreren Nutzern gleichzeitig zur Verfügung, beispielsweise über das Internet oder ähnliche Medien oder auch auf ausleihbaren Datenträgern wie DVDs etc.. Die tatsächliche Nutzung der Daten verlangt jedoch zusätzlich separate Zugangsinformation, die der Anwender häufig erst gegen die Zahlung von Gebühren erhält. Verfügt der Anwender über die Zugangsinformation, stehen die Nutzdaten dem Anwender rechtmäßig ein- oder mehrfach zur Verfügung. Die Weitergabe der Nutzdaten an Dritte ist jedoch in der Regel nicht erlaubt.

In solch einem System werden die Nutzdaten für eine Vielzahl von Anwendern verschlüsselt bereitgestellt. Um diese Nutzdaten zu entschlüsseln hat ein autorisierter Anwender oder eine Gruppe autorisierter Anwender einen individualisierten Schlüssel. Genauer betrachtet hat der Anwender einen zweiten Schlüssel, der zusammen mit einem ersten Schlüssel der zusammen mit den Nutzdaten bereitgestellt wird, letztendlich Schlüsselinformation ergibt, mit der die Nutzdaten entschlüsselt werden können.

Beim Einsatz der genannten Schlüssel werden spezielle Ressourcen des Rechners des Anwenders verwendet, so dass nur auf diesem Rechner die Schlüsselinformation verfügbar wird. Eine solche Bindung an den Empfängerrechner geschieht beispielsweise unter Verwendung einer Smartcard. Dabei gibt die Smartcard die individualisierte Schlüsselinformation zur Entschlüsselung der Nutzdaten an den Rechner des rechtmäßigen Besitzers aus, der damit die verschlüsselten Nutzdaten entschlüsseln kann, beispielsweise um einen Videofilm anzusehen. In einer Umgebung, in der der rechtmäßige Empfänger die Schlüsselinformation nur zur bestimmungsgeinäßen Entschlüsselung der Daten verwendet wird, ist dieses Verfahren sicher.

Leider gibt es viele Hacker, die die Schlüsselinformation aus dem erläuterten System extrahieren und anderen Nutzern, zum Teil sogar gegen ein Entgeld, zur Verfügung stellen. Der Angriff auf das Verschlüsselungssystem geschieht dabei zumeist dadurch, dass die von der Smartcard ausgehende Schlüsselinformation vor ihrer Anwendung zur Entschlüsselung der Nutzdaten abgefangen wird. Ein solcher Zugriff ist einem erfahrenen Hacker ohne große Probleme möglich. Für Software-Lösungen auf dem PC existieren für solche Angriffe sogar eine große Zahl von Werkzeugen, die den Zugriff auf die Schlüssel vereinfachen.

Ähnlich wie Smartcards funktionieren auch sogenannte "Dongles" zum Schutz von Nutzdaten. Diese Schutzmechanismen lassen sich jedoch durch Einbrechen in die geschützte Software mit einem entsprechend ausgerüsteten PC leicht außer Betrieb setzen. Das Werkzeug zum "Abschalten" des Schutzmechanismus wird dann über elektronische Netze unmittelbar weit verteilt.

Bei dem erläuterten Verfahren aus dem Stand der Technik ist die Datenmenge der Schlüsselinformation schmalbandig, d.h. gering, im Verhältnis zu den breitbandigen Datenmengen der zunächst verschlüsselten und später entschlüsselten Nutzdaten (beispielsweise einige hundert Kbyte Schlüsselinformation gegenüber einem Videofilm mit typischerweise 5,5 Gbyte ). Die Schlüsselinformation kann daher nicht nur leicht extrahiert werden sondern auch per Email o.ä. online und gegebenenfalls anonym an eine Vielzahl nicht autorisierter Anwender verteilt werden. Eine nicht autorisierte Distribution der entschlüsselten Nutzdaten (beispielsweise des entschlüsselten Videodatenstroms mit einer Größe von einigen Gbyte) ist hingegen wegen der Menge der Daten als weitgehend unmöglich anzusehen oder zumindest schwierig.

Im Ergebnis sind daher die ursprünglich verschlüsselten Nutzdaten im Internet oder einem ähnlichen Medium quasi für jedermann zugänglich und der Provider dieser Daten hat keine oder nur eine sehr eingeschränkte Kontrolle über deren Nutzung.

Die internationale Patentanmeldung WO 2004/027622 A2 beschreibt ein Verteilungssystem für digitalen Inhalt, wobei mehrere Benutzer auf einen Gateway-Server zugreifen können, nachdem sie sich authentifiziert haben. Jeder Benutzer hat eine digitale ID, die aus einem öffentlichen und einem privaten Schlüssel besteht. Ein authentifizierter Benutzer kann verschlüsselten digitalen Inhalt auf dem Gateway-Server ablegen und danach für ausgewählte andere Benutzer des Systems sog. "Tickets" erstellen, die den Schlüssel zum Entschlüsseln des abgelegten digitalen Inhalts enthalten. Diese Tickets werden mit dem öffentlichen Schlüssel der digitalen ID des ausgewählten Nutzers verschlüsselt. Mit dem privaten Schlüssel seiner digitalen ID kann der ausgewählte Benutzer das Ticket entschlüsseln und damit auf den digitalen Inhalt, der auf dem Gateway-Server liegt, zugreifen.

Das US-Patent 6,728,379 B1 offenbart ein Verteilungssystem für digitalen Inhalt, das digitalen Inhalt verschlüsselt an Benutzer verteilt. Bei diesem Verfahren werden zwei (schmalbandige) Schlüsselpaare zum Verschlüsseln / Entschlüsseln verwendet (die Paare [Kce, Kcd] und[Kde, Kdd]). Der digitale Inhalt wird mit dem Inhalts-Schlüssel Kce verschlüsselt und dann an den Benutzer, d.h. den Informationsprozessor geschickt. Der Benutzer erhält den korrespondierenden Entschlüsselungsteil Kcd für den digitalen Inhalt selbst in verschlüsselter Form, wobei dazu der distribution-Schlüssel Kde verwendet wird. Wenn der Benutzer den digitalen Inhalt bezahlt hat, wird ihm der inverse distribution-Schlüssel Kdd zugeschickt. In einem Kryptographieprozessor, der eine Untereinheit des Informationsprozessors ist und aus einem Sicherheitschip bestehen kann, wird dann durch die Anwendung von Kdd das mit Kde verschlüsselte Entschlüsselungsteil Kcd entschlüsselt. Schließlich wird durch Anwendung von Kcd der verschlüsselte digitale Inhalt entschlüsselt (wiederum innerhalb des Kryptographieprozessors).

Der vorliegenden Erfindung liegt daher das Problem zugrunde, die oben genannten Nachteile des Stands der Technik zu überwinden und insbesondere ein Verfahren und eine Vorrichtung bereitzustellen, mit denen große verschlüsselte Datenmengen gegen einen unberechtigten Zugriff und die breite Verteilung an nicht autorisierte Anwender gesichert werden können.

### 3. Zusammenfassung der Erfindung

Die vorliegende Erfindung wird durch den Gegenstand der unabhängigen Patentansprüche definiert.

Ein erster Aspekt betrifft ein Verfahren zur Entschlüsselung von verschlüsselten breitbandigen Daten durch einen oder mehrere autorisierte Anwender, mit den folgenden Schritten:
- Bereitstellen der verschlüsselten breitbandigen Daten für eine Vielzahl von Anwender;
- Bereitstellen von im Vergleich zu den breitbandigen Daten schmalbandiger, verschlüsselter oder unverschlüsselter Schlüsselinformation, die für einen oder mehrere autorisierte Anwender individualisiert ist, ausschließlich in einer Entschlüsselungseinheit, wobei die schmalbandige Schlüsselinformation in der Entschlüsselungseinheit in einer dem autorisierten Anwender nicht zugänglichen Form vorgehalten wird;
- zumindest teilweises Entschlüsseln der verschlüsselten breitbandigen Daten in der Entschlüsselungseinheit zur Ausgabe eines zumindest teilweise entschlüsselten breitbandigen Datenstroms; oder
- Erzeugung von breitbandiger Schlüsselinformation aus der schmalbandigen Schlüsselinformation in der Entschlüsselungseinheit zur nachfolgenden Entschlüsselung der verschlüsselten breitbandigen Daten.

Auf die Reihenfolge der ersten beiden Verfahrensschritte kommt es dabei nicht an. Vorzugsweise umfasst die Entschlüsselungseinheit einen Sicherheitsbaustein, in dem die schmalbandige Schlüsselinformation gespeichert ist, und der die Entschlüsselung der breitbandigen Daten bzw. die Erzeugung der breitbandigen Schlüsselinformation durchführt. In einem anderen Ausführungsbeispiel umfasst die Entschlüsselungseinheit einen ersten Sicherheitsbaustein, in dem die schmalbandige Schlüsselinformation gespeichert ist und einen zweiten Sicherheitsbaustein, der vom ersten Sicherheitsbaustein über eine sichere Kommunikation die schmalbandige Schlüsselinformation erhält und der die Entschlüsselung der breitbandigen Daten bzw. die Erzeugung der breitbandigen Schlüsselinformation durchführt.

Ein erster Aspekt des erfindungsgemäßen Verfahrens besteht darin, nicht nur zum Bereitstellen der schmalbandigen Schlüsselinformation sondern auch zur Entschlüsselung der Nutzdaten einen oder mehrere Sicherheitschips zu verwenden d.h. die Entschlüsselung in der sicheren Umgebung der Entschlüsselungseinheit durchzuführen. Anders als ein PC oder ein anderer Computer für allgemeine Aufgaben, der für einen erfahrenen Hacker letztlich vollkommen zugänglich ist, so dass darin verwendete Schlüssel immer in der Gefahr sind früher oder später extrahiert zu werden, verbleibt im erläuterten Verfahren die schmalbandige Schlüsselinformation in der sicheren Entschlüsselungseinheit sowohl bei ihrer Bereitstellung als auch bei der zumindest teilweisen Entschlüsselung der verschlüsselten breitbandigen Daten oder der Erzeugung der breitbandigen Schlüsselinformation. Im Ergebnis verlässt die Entschlüsselungseinheit nur breitbandige Information (die teilweise entschlüsselten Daten oder die erzeugte breitbandige Schlüsselinformation), die nur mit sehr großem Aufwand an unbefugte Dritte weitergegeben werden kann.

Um das erläuterte Verfahren auf Videodaten anwenden zu können, ist es vorteilhaft, wenn die Datendurchsatzrate des entschlüsselnden Sicherheitsbausteins im Bereich mehrerer Mbit/s liegt. In einer bevorzugten Ausführungsform werden zumindest Teile der schmalbandigen Schlüsselinformation vor der Entschlüsselung der breitbandigen Daten oder der Erzeugung der breitbandigen Schlüsselinformation verschlüsselt in die Entschlüsselungseinheit übertragen und dort entschlüsselt.

Gemäß eines weiteren Aspekts betrifft die vorliegende Erfindung eine Entschlüsselungseinheit zur Entschlüsselung von verschlüsselten breitbandigen Daten, die einer Vielzahl von Anwendern verfügbar gemacht werden, durch einen oder mehrere autorisierte Anwender, mit einem Speicherbereich, der im Vergleich zu den breitbandigen Daten schmalbandige Schlüsselinformation, die für den autorisierten Anwender individualisiert ist, flüchtig oder nicht flüchtig so speichert, dass sie für den / die autorisierten Anwender nicht zugänglich ist, einem Verarbeitungsbereich, der dem / den autorisierten Anwender(n) nicht zugänglich ist und der mit der gespeicherten schmalbandigen Schlüsselinformation die verschlüsselten breitbandigen Daten zumindest teilweise entschlüsselt, um sie als teilweise entschlüsselten breitbandigen Datenstrom auszugeben, oder der eine breitbandige Schlüsselinformation zur nachfolgenden Entschlüsselung der breitbandigen Daten erzeugt, wobei die Entschlüsselungseinheit als ein einzelner Sicherheitsbaustein oder als eine Mehrzahl von Sicherheitsbausteinen ausgebildet ist, die über eine sichere Kommunikationsverbindung miteinander verbunden sind.

Weitere vorteilhafte Merkmale des erfindungsgemäßen Verfahrens und der Entschlüsselungseinheit finden sich in weiteren abhängigen Ansprüchen.

### 4. Kurze Beschreibung der begleitenden Figuren

Im Folgenden werden Aspekte der vorliegenden Erfindung unter Bezugnahme auf die begleitenden Figuren genauer erläutert. Diese Figuren zeigen:
- Fig. 1:: Eine schematische Darstellung einer ersten Ausführungsform der erfindungsgemäßen Entschlüsselungseinheit zur Verwendung in einer ersten Ausführungsform des erfindungsgemäßen Verfahrens.
- Fig. 2:: Eine schematische Darstellung einer zweiten Ausführungsform der erfindungsgemäßen Entschlüsselungseinheit zur Verwendung in einer zweiten Ausführungsform des erfindungsgemäßen Verfahrens.

### 5. Detaillierte Beschreibung bevorzugter Ausführungsbeispiele

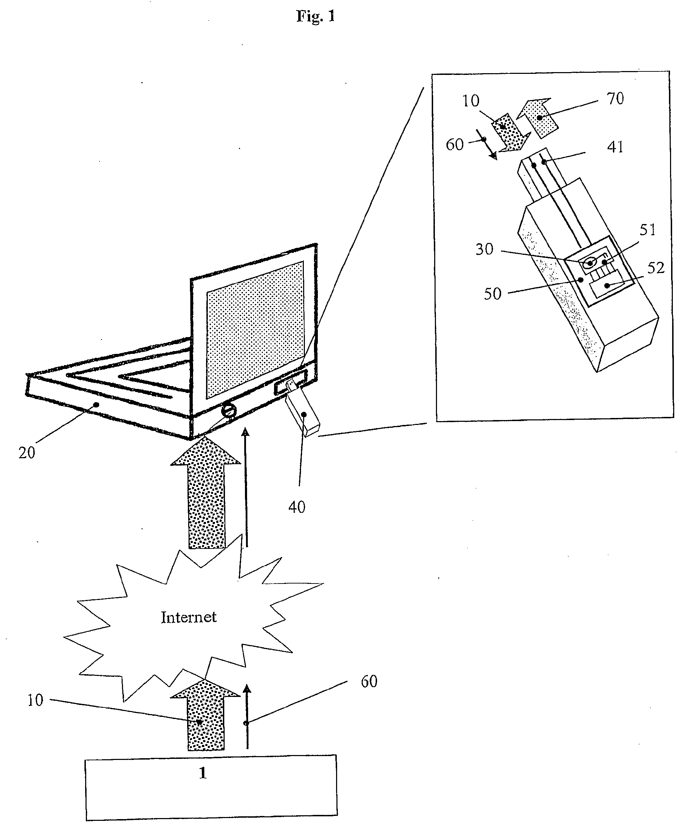

Fig. 1 zeigt eine erste gegenwärtig bevorzugte Ausführungsform der vorliegenden Erfindung. Dabei lädt ein Anwender Videodaten 10 zur Betrachtung auf seinem PC 20 (hier als Notebook dargestellt). Anstelle des PC 20 könnte auch eine andere geeignete Vorrichtung verwendet werden, mit der Videodaten aus dem Internet oder von einer anderen Datenquelle heruntergeladen werden können.

Die Videodaten 10 werden in verschlüsselter Form von einem Provider 1 im Internet bereitgestellt. Es ist daher grundsätzlich einer Vielzahl von Anwendern möglich die Videodaten 10 herunterzuladen. Statt einem Herunterladen aus dem Internet, das große Bandbreiten des Internetzugangs voraussetzt, kann der Anwender die verschlüsselten Videodaten auch auf einer gekauften oder gegen eine Gebühr ausgeliehenen DVD oder einem anderen Datenträger erhalten. Unabhängig davon erfordert die Verwendung der Daten, d.h. das Betrachten des Video-films, schmalbandige Schlüsselinformation 30, d.h. Schlüsselinformation, die im Vergleich zu den breitbandigen Videodaten 10 eine ungleich kleinere Datenmenge in Anspruch nimmt. In dem in Fig. 1 dargestellten Ausführungsbeispiel wird diese Schlüsselinformation 30 in einem USB-Stick 40 vorgehalten.

Wie in Fig. 1 schematisch gezeigt, werden die verschlüsselten Videodaten 10 zu einem Sicherheitschip 50 innerhalb des USB-Sticks 40 geführt. In einem Speicherbereich 51 des Sicherheitschips 50 ist die schmalbandige Schlüsselinformation 30 gespeichert, die in einem Verarbeitungsbereich 52 des Sicherheitschips 50 dazu verwendet wird, um die ankommenden verschlüsselten Videodaten 10 zu entschlüsseln.

Über die Schnittstelle 41 des USB-Sticks 40 werden die entschlüsselten Videodaten 70 an den PC 20 zurüelcgegeben. Eine geeignete Applikation auf dem PC kann dann den entschlüsselten Videodatenstrom dem PC-Benutzer präsentieren. Der Sicherheitschip 50 muss dabei nicht zwingend die vollständige Entschlüsselung der Videodaten 10 durchführen. Wesentlich ist jedoch, dass der den USB-Stick 40 40 verlassende Datenstrom 70 breitbandig ist, so dass eine einfache Distribution über Email o.ä. bereits aufgrund der Datenmenge nur schwer möglich ist.

Abhängig von der benötigen Datenrate können bei der Entschlüsselung der Videodaten noch Techniken des Watermarkings o.ä. integriert werden, so dass der entschlüsselte Videodatenstrom 70 identifizierbar wird. Dadurch lässt sich zusätzlich verhindern bzw. nachverfolgen, wenn der Strom der entschlüsselten Videodaten trotz seiner Größe unrechtmäßig an Dritte weitergeben wird.

Anstelle eines einzigen Sicherheitschips 50 ist es auch denkbar zwei Sicherheitschips im USB-Stick 40 anzuordnen (nicht dargestellt), von denen der eine die Speicherung der schmalbandigen Schlüsselinformation 30 übernimmt und der andere die Entschlüsselung der Videodaten. In diesem Fall, wird die Schlüsselinformation 30 über einen sicheren Kommunikationskanal zwischen den beiden Sicherheitschips übertragen.

In den aus dem Stand der Technik bekannten Systemen wird die Schlüsselinformation aus der sicheren Umgebung, beispielsweise einer Smartcard, in die leistungsstärkere, aber weniger sichere Umgebung eines PGs übergeben, so dass einer oder mehrere Prozessoren des PCs die Entschlüsselung durchführen und den entschlüsselten Videodatenstrom bereitstellen. Gemäß der vorliegenden Erfindung erfolgt die Bereitstellung der schmalbandigen Schlüsselinformation und die Entschlüsselung in einer Einheit, die entweder durch einen einzelnen physikalischen Baustein (den Sicherheitschip 50, wie in Fig. 1 dargestellt) oder durch eine sicherheitstechnisch gekoppelte Lösung (zwei oder mehr sicher miteinander verbundene Sicherheitschips, nicht dargestellt) gebildet wird. Eine sicherheitstechnische Kopplung der beiden Sicherheitschips kann durch eine hardwareseitige Unterstützung der Verschlüsselung des Datenkanals zwischen den Hardware-Komponenten z.B. durch den Einsatz einer Session-Key-Aushandlung unter Verwendung einer RSA-Challenge aufgebaut werden, ohne dass das Konzept an Sicherheit verliert.

Im Ergebnis wird in beiden Varianten die Schlüsselinformation 30 nicht in die PC-Welt extrahiert und kann daher auch nicht durch das Manipulieren der PC-Soft- und Hardware ermittelt werden. Dies ist möglich, da es Sicherheitschips gibt, die Datenmengen im Bereich mehrerer Mbit/s durchzusetzen und zu entschlüsseln in der Lage sind. Klassische Smartcards (gemäß ISO 7816 oder kontaktlose Karten) verfügen über serielle Schnittstellen, die Datenraten nicht über 1 Mbit/s erlauben und sind daher für die Entschlüsselung der Daten ungeeignet. Im Gegensatz dazu weist der in Fig. 1 gezeigte USB-Stick eine Datenrate von im Wesentlichen zweimal der Datenrate der Videodaten 10 auf, da diese Daten empfangen, zumindest teilweise entschlüsselt und an den PC 20 zurückgegeben werden. Der maximale Datendurchsatz durch den Sicherheitschip 50 beschränkt die mögliche nutzbare Bitrate.

Wie in Fig. 1 gezeigt wird im bevorzugten Ausführungsbeispiel zusätzlich zu den verschlüsselten Videodaten 10 ein kleiner Vel-waltungsdatenstrom 60 zur Verwaltung der Zugangsberechtigung an den PC 20 und damit den USB-Stick 40 übertragen. Der USB-Stick 40 ist dazu vorzugsweise individuell adressierbar und verfügt über einen individuellen Schlüssel (nicht dargestellt). Damit kann ein sicherer Datenkanal zwischen dem Provider 1 und dem USB-Stick 40 aufgebaut werden. Über diesen Datenkanal wird die Schlüsselinformation zur Entschlüsselung der verschlüsselten Videodaten 10 verschlüsselt unter dem individuellen Schlüssel des USB-Stick 40, mitgesendet (nicht dargestellt). Alternativ dazu kann die Schlüsselinformation auch unmittelbar in die verschlüsselten Videodaten 10 mit integriert werden.

Wenn die Schlüsselinformation mit dem individuellen Schlüssel des USB-Stick entschlüsselt worden ist, steht sie als individualisierte Schlüsselinformation 30 zur Verfügung, um wie oben erläutert die zumindest teilweise Entschlüsselung der Videodaten 10 durchzuführen.

Über den Verwaltungsdatenstrom 60 können zusätzlich auch komplexere Konzepte wie beispielsweise die Bereitstellung der Rechte zur n-maligen Wiedergabe der Videodaten 10 oder zur zeitlichen Einschränkung der Nutzung der Videodaten realisiert werden. Die verschiedensten Applikationen, die mehr erfordern als eine reine Ja/Nein-Entscheidung, ob ein Anwender autorisiert ist, die angebotenen breitbandigen Daten zu nutzen, sind daher ohne Weiteres möglich.

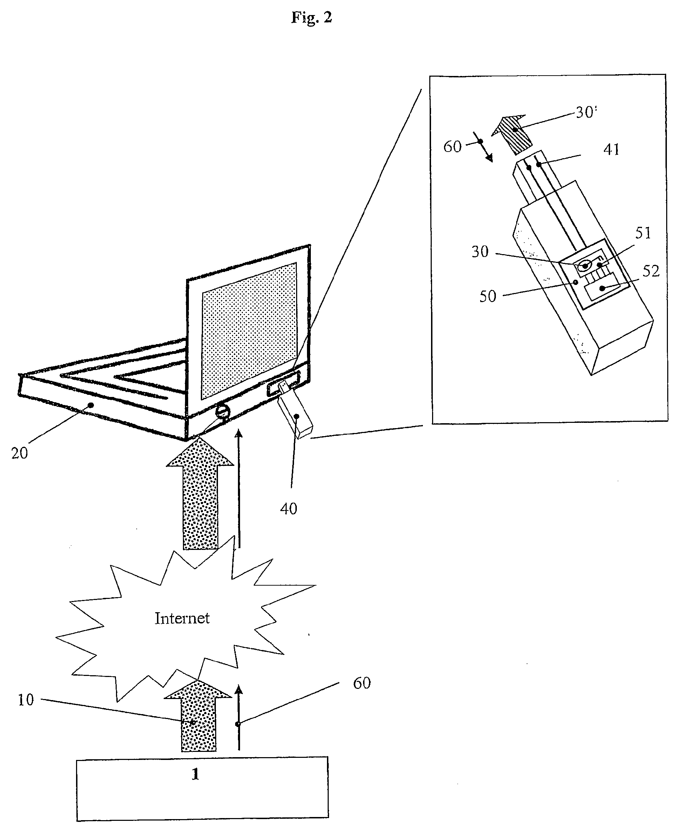

Fig. 2 zeigt eine weitere Ausführungsform der vorliegenden Erfindung. Anders als in der oben erläuterten Ausführungsform findet hier wie im Stand der Technik die Entschlüsselung der verschlüsselten Videodaten auf dem PC oder einer anderen geeigneten Vorrichtung statt. Die dazu erforderliche Schlüsselinformation 30' erzeugt der USB-Stick aus der Schlüsselinformation 30 und gibt sie an den PC aus. Diese Schlüsselinformation 30' unterscheidet sich von der Schlüsselinformation 30 innerhalb des USB-Sticks 40 durch ihren Umfang. Während die ausschließlich im USB-Stick verbleibende Schlüsselinformation 30 schmalbandig ist, d.h. deutlich kleiner ist als die zu entschlüsselnden Videodaten 10, ist die Schlüsselinformation 30' breitbandig, d.h. sie weist im Wesentlichen dieselbe Größenordnung auf wie die Videodaten 10. Damit wird auch in dieser Ausführungsform eine Weitergabe an unbefugte Dritte verhindert oder zumindest erschwert.

Auch in dieser Ausführungsform kann die Schlüsselinformation 30 innerhalb des USB-Sticks 40 zunächst aus einem individuellen Schlüssel des USB-Sticks und weiterer Schlüsselinformation generiert werden, die entweder den Videodaten 10 beigefügt wird oder über den zusätzlichen Verwaltungsdatenstrom 60 an den USB-Stick 40 geschickt wird.

## Patentansprüche

1. Verfahren zur Entschlüsselung von verschlüsselten breitbandigen Daten durch einen oder mehrere autorisierte Anwender, mit den folgenden Schritten:
a. Bereitstellen der verschlüsselten breitbandigen Daten (10) für eine Vielzahl von Anwendern;
b. Bereitstellen von im Vergleich zu den breitbandigen Daten (10) schmalbandiger, verschlüsselter oder unverschlüsselter Schlüsselinformation (30), die für einen oder mehrere autorisierte Anwender individualisiert ist, ausschließlich in einer Entschlüsselungseinheit (40), wobei die schmalbandige Schlüsselinformation (30) in der Entschlüsselungseinheit (40) in einer dem autorisierten Anwender nicht zugänglichen Form vorgehalten wird; und
c. Erzeugung von breitbandiger Schlüsselinformation (30'), welche dieselbe Größenordnung wie die verschlüsselten breitbandigen Daten (10) aufweist, aus der schmalbandigen Schlüsselinformation (30) in der Entschlüsselungseinheit (40) zur nachfolgenden Entschlüsselung der verschlüsselten breitbandigen Daten.

2. Verfahren nach Anspruch 1, wobei die Entschlüsselungseinheit (40) einen Sicherheitsbaustein (50) umfasst, in dem die schmalbandige Schlüsselinformation (30) gespeichert ist, und die Erzeugung der breitbandigen Schlüsselinformation (30') durchführt.

3. Verfahren nach Anspruch 1, wobei die Entschlüsselungseinheit (40) einen ersten Sicherheitsbaustein umfasst, in dem die schmalbandige Schlüsselinformation (30) gespeichert ist und einen zweiten Sicherheitsbaustein, der vom ersten Sicherheitsbaustein über eine sichere Kommunikation die schmalbandige Schlüsselinformation (30) erhält und die Erzeugung der breitbandigen Schlüsselinformation (30') durchführt.

4. Verfahren nach Anspruch 2 oder 3, wobei die Datendurchsatzrate des entschlüsselnden bzw. erzeugenden Sicherheitsbausteins (50) im Bereich mehrerer Mbit/s liegt.

5. Verfahren nach einem der vorhergehenden Ansprüche wobei zumindest Teile der schmalbandigen Schlüsselinformation (30) vor der Erzeugung der breitbandigen Schlüsselinformation (30') verschlüsselt in die Entschlüsselungseinheit (40) übertragen und dort entschlüsselt werden.

6. Verfahren nach Anspruch 5, wobei die Übertragung von Teilen der Schlüsselinformation (30) die Festlegung von Rechten zur Nutzung der breitbandigen Daten (10) durch den / die Anwender umfasst, insbesondere zur mehrfachen oder zeitlich begrenzten Nutzung.

7. Verfahren nach einem der vorhergehenden Ansprüche, wobei der ausgegebene Datenstrom (70) digital signiert wird.

8. Entschlüsselungseinheit (40) zur Entschlüsselung von verschlüsselten breitbandigen Daten (10), die einer Vielzahl von Anwendern verfügbar gemacht werden, durch einen oder mehrere autorisierte Anwender mit:
a. einem Speicherbereich (51), der im Vergleich zu den breitbandigen Daten schmalbandige Schlüsselinformation (30), die für den autorisierten Anwender individualisiert ist, flüchtig oder nicht flüchtig so speichert, dass sie für den / die autorisierten Anwender nicht zugänglich ist,
b. einem Verarbeitungsbereich (52), der dem / den autorisierten Anwender(n) nicht zugänglich ist und der mit der gespeicherten schmalbandigen Schlüsselinformation (30) eine breitbandige Schlüsselinformation (30'), welche dieselbe Größenordnung wie die verschlüsselten breitbandigen Daten (10) aufweist, zur nachfolgenden Entschlüsselung der breitbandigen Daten (10) erzeugt,
c. wobei die Entschlüsselungseinheit (40) als ein einzelner Sicherheitsbaustein (50) oder als eine Mehrzahl von Sicherheitsbausteinen ausgebildet ist, die über eine sichere Kommunikationsverbindung miteinander verbunden sind.

9. Entschlüsselungseinheit nach Anspruch 8, ferner aufweisend Einrichtungen, für eine verschlüsselte Übertragung von zumindest Teilen der schmalbandigen Schlüsselinformation (30) in den Speicherbereich (51) der Entschlüsselungseinheit (40).

10. Entschlüsselungseinheit nach Anspruch 8 oder 9 ferner aufweisend eine Schnittstelle (41) zum Empfang der verschlüsselten breitbandigen Daten (10) und zur Ausgabe der breitbandigen Schlüsselinformation (30').

11. Entschlüsselungseinheit nach einem der Ansprüche 8 - 10, wobei die Entschlüsselungseinheit (40) als ein USB-Stick (40) ausgebildet ist.

## Claims

1. Method for decoding encoded broadband data by one or more authorized users comprising the following steps:
a. providing the encoded broadband data (10) for a plurality of users;
b. providing encoded or non-encoded key information (30), which is narrowband in comparison to the broadband data and which is individualized for one or more authorized users, exclusively in a decoding unit (40), wherein the narrowband key information (30. is held in the decoding unit in a form which is not accessible for the authorized user;
c. generating broadband key information (30') which has a size of essentially the same order of magnitude as the broadband data (10) from the narrowband key information (30) in the decoding unit (40) for the subsequent decoding of the encoded broadband data.

2. Method according to claim 1, wherein the decoding unit (40) comprises a security component (50), where the narrowband key information (30) is stored and which performs the generation of the broadband key information (30').

3. Method according to claim 1, wherein the decoding unit (40) comprises a first security component where the narrowband key information (30) is stored and a second security component which receives the narrowband key information (30) from the first security component via a secure communication and performs the generation of broadband key information (30').

4. Method according to claim 2 or 3, wherein the data transfer rate of the decoding -or generating security component (50) is in the range of several Mbit/s.

5. Method according to any of the preceding claims, wherein at least parts of the narrowband key information (30) are transferred into the decoding unit (40) in an encoded form and are decoded therein, before the broadband key information (30') is generated.

6. Method according to claim 5, wherein the transfer of parts of the key information (30) comprises the specification of rights for the usage of the broadband data (10) by the user(s), in particular for multiple or time limited usage.

7. Method according to any of the preceding claims, wherein the output data stream (70) is digitally signed.

8. Decoding unit (40) for decoding encoded broadband data (10), which are made accessible to a plurality of users, by one or more authorized users, comprising:
a. a storage region (51), which stores key information (30), which is narrowband in comparison to the broadband data and which is individualized for the authorized user, in a non-permanent or permanent way such that it is not accessible for the one or more authorized user(s);
b. a processing region (52) which is not accessible to the authorized user(s) and which generates broadband key information (30'), which has a size of essentially the same order of magnitude as the broadband data (10), for the subsequent decoding of broadband data (10) using the stored narrowband key information (30),
c. wherein the decoding unit (40) is formed as a single security component (50) or as a plurality of security components which are connected to each other via a secure communication connection.

9. The decoding unit according to claim 8, further comprising units for an encoded transmission of at least parts of the narrowband key information (30) into the storage region (51) of the decoding unit (40).

10. The decoding unit according to claim 8 or 9, further comprising an interface (41) for receiving the encoded broadband data (10) and for outputting the broadband key information (30').

11. The decoding unit according to claims 8 to 10, wherein the decoding unit (40) is formed as a USB stick (40).

## Revendications

1. Procédé de décryptage, par un ou plusieurs utilisateurs autorisés, de données à large bande cryptées, comprenant les étapes suivantes :
a. mise à disposition des données à large bande cryptées (10) pour une pluralité d' utilisateurs ;
b. mise à disposition d'une information clé cryptée ou non cryptée (30) à bande étroite par rapport aux données à large bande (10), qui est individualisée pour un ou plusieurs utilisateurs autorisés, exclusivement dans une unité de décryptage (40), l'information clé à bande étroite (30) étant contenue dans l'unité de décryptage (40) sous une forme non accessible à l'utilisateur autorisé ; et
c. génération d'une information clé à large bande (30'), qui présente le même ordre de grandeur que les données à large bande cryptées (10), à partir de l'information clé à bande étroite (30) dans l'unité de décryptage (40) pour un décryptage ultérieur des données à large bande cryptées.

2. Procédé selon la revendication 1, l'unité de décryptage (40) comprenant un module de sécurité (50) dans lequel l'information clé à bande étroite (30) est stockée et qui effectue la génération de l'information clé à large bande (30').

3. Procédé selon la revendication 1, l'unité de décryptage (40) comprenant un premier module de sécurité dans lequel l'information clé à bande étroite (30) est stockée et un second module de sécurité qui reçoit l'information clé à bande étroite (30) du premier module de sécurité par l'intermédiaire d'une communication sûre et qui effectue la génération de l'information clé à large bande (30').

4. Procédé selon la revendication 2 ou 3, le débit de données du module de sécurité décrypteur, respectivement générateur (50) étant de l'ordre de plusieurs Mbit/s.

5. Procédé selon une des revendications précédentes, au moins des parties de l'information clé à bande étroite (30) étant transmises codées à l'unité de décryptage (40) avant la génération de l'information clé à large bande (30') et y étant décodées.

6. Procédé selon la revendication 5, la transmission de parties de l'information clé (30) englobant la définition de droits d'utilisation des données à large bande (10) par le / les utilisateurs, en particulier d'utilisation multiple ou limitée dans le temps.

7. Procédé selon une des revendications précédentes, le flux de données émis (70) étant signé numériquement.

8. Unité de décryptage (40) pour le décryptage de données à large bande cryptées (10), qui sont mises à la disposition d'une pluralité d'utilisateurs, par un ou plusieurs utilisateurs autorisés, comprenant :
a. une zone de stockage (51) qui stocke de manière volatile ou non volatile une information clé (30) à bande étroite par rapport aux données à large bande, laquelle est individualisée pour l'utilisateur autorisé, de façon qu'elle ne soit pas accessible au / aux utilisateurs autorisés,
b. une zone de traitement (52) qui n'est pas accessible au / aux utilisateur(s) autorisé(s) et qui possède avec l'information clé à bande étroite (30) stockée une information clé à large bande (30') qui présente le même ordre de grandeur que les données à large bande cryptées (10) pour un décryptage ultérieur des données à large bande (10),
c. l'unité de décryptage (40) étant conçue sous la forme d'un module de sécurité distinct (50) ou d'une pluralité de modules de sécurité qui sont reliés entre eux par l'intermédiaire d'une liaison de communication sûre.

9. Unité de décryptage selon la revendication 8, comprenant en outre des dispositifs pour une transmission cryptée d'au moins des parties de l'information clé à bande étroite (30) à la zone de stockage (51) de l'unité de décryptage (40).

10. Unité de décryptage selon la revendication 8 ou 9, comprenant en outre une interface (41) pour la réception des données à large bande cryptées (10) et pour l'émission de l'information clé à large bande (30' ) .

11. Unité de décryptage selon une des revendications 8 à 10, l'unité de décryptage (40) étant conçue sous la forme d'une clé USB (40).
